# EUROPÄISCHE PATENTANMELDUNG

(11) **EP 2 666 391 A2**
(43) Veröffentlichungstag der Anmeldung: **27.11.2013**
(21) Anmeldenummer: 13168928.3
(22) Anmeldetag: 23.05.2013
(51) Int. Cl.: A47F 3/12

(54) **Wandelement, Kreuzprofil, Möbelstück und Bausatz dafür**

(30) Priorität: 24.05.2012 DE 102012104505
(71) Anmelder: Museumstechnik GmbH, 10827 Berlin (DE)
(72) Erfinder: Grosch, Michael, 10405 Berlin (DE); Daniel, Ulf, 12101 Berlin (DE); Kolb, Uwe, 10965 Berlin (DE)
(74) Vertreter: Zimmermann & Partner

(57) **Zusammenfassung**

Die Erfindung betrifft ein Wandelement (100) für ein Möbelstück (500), insbesondere eine Vitrine, umfassend einen plattenförmigen Grundkörper (10) aus Glas mit einer Grundfläche (12) und einer zur Grundfläche (12) gegenüberliegenden Deckfläche (11) sowie mindestens einer zwischen der Grundfläche (12) und der Deckfläche (11) angeordneten Seitenfläche (13, 14, 15, 16) und mindestens ein Profilelement (20) mit mindestens einer Gewindebohrung (21). Das mindestens eine Profilelement (20) ist derart fest mit der mindestens einen Seitenfläche (13, 14, 15, 16) verbunden, dass die mindestens eine Gewindebohrung (21) in einer Normalenrichtung der mindestens einen Seitenfläche (13, 14, 15, 16) orientiert ist.

Ferner betrifft die Erfindung ein Kreuzprofil (32, 33a, 33b, 37) zur Verbindung zweier Wandelemente (100). Das Kreuzprofil (32, 33a, 33b, 37) umfasst zwei in Richtung seiner Längsachse verlaufende Aussparungen (34) zur Aufnahme einer Schlauchdichtung (40) und mindestens zwei Durchgangslöcher (31), die senkrecht zu der Längsachse verlaufen.

Des Weiteren betrifft die Erfindung Möbelstück (500, 501, 502) mit mehreren paarweise mit einem Profil (30, 32, 33, 33a, 33b, 37, 60, 61) lösbar verbundenen Wandelementen (100), sowie einen Bausatz für das Möbelstück (500, 501, 502).

## Beschreibung

Die vorliegende Erfindung betrifft ein Wandelement für ein Möbelstück, ein Kreuzprofil zur Verbindung zweier Wandelemente, ein Möbelstück, insbesondere eine Glasvitrine, sowie einen Bausatz für das Möbelstück.

Bei bekannten Glasvitrinen stellen die Verbindungen zwischen den typischerweise rechtwinklig zueinander stehenden relativ dünnen Glasscheiben, die sehr vorsichtig zu handhaben sind, häufig kritische Stellen insbesondere hinsichtlich der Dichtigkeit und bei der Montage dar. Beispielsweise können die Glasscheiben von einem die Glasscheiben verbindenden Rahmen aus mit U-förmigen Nuten versehenen und untereinander fest miteinander verbundenen Metallprofilen aufgenommen werden. Eine weitere Möglichkeit besteht darin, die Glasscheiben an einen fertigen Rahmen anzukleben oder anzuschrauben, wobei die einzelnen Scheiben vor dem Anschrauben durchbohrt werden müssen. Das Befestigen der Scheiben in oder an dem Rahmen ist einerseits sehr arbeitsaufwändig und kann andererseits beim Durchbohren, Einsetzen und /oder Einspannen der Scheiben zu Glasbruch führen. Wenn die Glasscheiben am Rahmen angeklebt werden, können die Vitrinen zudem nicht ohne weiteres wieder demontiert bzw. repariert werden.

Die vorliegende Erfindung dient dazu, ein Möbelstück, typischerweise eine Glasvitrine, bereitzustellen, dass zumindest einige der angesprochenen Nachteile zumindest teilweise nicht aufweist.

Vor diesem Hintergrund wird ein Wandelement gemäß Anspruch 1, ein Kreuzprofil gemäß Anspruch 7, ein Möbelstück gemäß Anspruch 10 und ein Bausatz gemäß Anspruch 19 angegeben.

Gemäß einem Ausführungsbeispiel umfasst ein Wandelement für ein Möbelstück, insbesondere eine Vitrine, einen plattenförmigen Grundkörper aus Glas mit einer Grundfläche, einer der Grundfläche gegenüberliegenden Deckfläche sowie mindestens einer zwischen der Grundfläche und der Deckfläche angeordneten Seitenfläche. Außerdem umfasst das Wandelement mindestens ein Profilelement mit mindestens einer Gewindebohrung. Das mindestens eine Profilelement ist derart fest mit der mindestens einen Seitenfläche verbunden, dass die mindestens eine Gewindebohrung in einer Normalenrichtung der mindestens einen Seitenfläche orientiert ist. Dadurch ist die die mindestens eine Gewindebohrung des fest an der mindestens einen Seitenfläche angebrachten Profilelements seitlich zugänglich. Dies ermöglicht eine einfache lösbare Befestigung des Wandelements einem Rahmen oder einem Profil, z.B. über eine Schraubverbindung. Damit können Möbelstücke, insbesondere Glasvitrinen, einfach montiert bzw. wieder abgebaut werden. Zudem wird dabei das Risiko der Beschädigung des Wandelements bei der Montage bzw. Demontage reduziert.

Typischerweise ist der plattenförmigen Grundkörper eine Glasscheibe. Es ist aber auch möglich, dass der Grundkörper aus einem anderen leicht brüchigem Material wie z.B. Naturstein besteht und so dünn ausgeführt ist, dass er nicht geeignet ist ein Gewindenegativ zu bergen.

Gemäß einem Ausführungsbeispiel umfasst ein Wandelement für ein Möbelstück, insbesondere eine Vitrine, einen plattenförmigen Grundkörper mit einer Grundfläche und einer der Grundfläche gegenüberliegenden Deckfläche sowie mit mindestens einer zwischen der Grundfläche und der Deckfläche angeordneten Seitenfläche, und mindestens ein Profilelement mit mindestens einer Gewindebohrung, wobei der plattenförmige Grundkörper nicht geeignet ist, ein Gewindenegativ aufzunehmen, und wobei das mindestens eine Profilelement derart fest mit der mindestens einen Seitenfläche verbunden ist, dass die mindestens eine Gewindebohrung in einer Normalenrichtung der mindestens einen Seitenfläche orientiert ist.

Typischerweise wird der plattenförmige Grundkörper von einer Glasplatte oder einer Natursteinplatte gebildet.

Unter den Begriffen "Profil" und "Profilelement", wie sie vorliegend verwendet werden, soll ein im Wesentlichen stabförmiges bzw. langgestrecktes Bauteil aus einem stabilen Werkstoff wie Aluminium und Stahl mit einer Profilachse bzw. Längsachse verstanden werden, dessen Querschnitt sich im Wesentlichen zumindest in zentralen Teilen bezüglich seiner Profilachse nicht ändert. D.h., die zur Profilachse orthogonal verlaufenden Querschnitte durch das Bauteil sind bis auf etwaige Durchgangslöcher zumindest in einem Mittelteil typischerweise identisch. Bspw. kann das Profil bzw. das Profilelement ein extrudierter Körper sein oder aus extrudierten Körpern bestehen.

Die Formulierung, dass ein Profilelement fest mit einer Seitenfläche des plattenförmigen Grundkörpers verbunden ist, wie sie vorliegend verwendet wird, soll beschreiben, dass die Seitenfläche des plattenförmigen Grundkörpers mit einer im Wesentlichen parallel dazu angeordneten Oberfläche des Profilelements direkt oder über eine Zwischenschicht, z.B. eine Haftvermittelungsschicht, verbunden ist, wobei der gebildete Verbund nicht ohne weiteres lösbar ist, z.B. nicht ohne die Oberfläche des Profilelements und/oder den plattenförmigen Grundkörper zu beschädigen. Typischerweise ist der überwiegende Teil, typischerweise mehr als etwa 70%, z.B. etwa 90% bis etwa 100%, der Seitenfläche des plattenförmigen Grundkörpers mit der Oberfläche des Profilelements verbunden. Dadurch kann ein besonders stabiler Verbund bereitgestellt werden.

Typischerweise ist das mindestens eine Profilelement auf die mindestens eine Seitenfläche aufgeklebt. Dadurch kann auf einfache Weise ein flächiger und fester Verbund zwischen dem plattenförmigen Grundkörper und dem Profilelement bereitgestellt werden. Ein flächiger Verbund zwischen dem plattenförmigen Grundkörper und dem Profilelement kann aber auch über eine Metall-Glas-Verbindung realisiert werden, wenn das Profilelement aus einem Metall, wie bspw. Aluminium besteht.

Außerdem kann der Verbund zwischen Profilelement und plattenförmigem Grundkörper bereits bei der Fertigung des Wandelements hergestellt werden. Dadurch kann das Risiko der Beschädigung des Wandelements bei der Montage (z.B. Glasbruch) reduziert werden.

Typischerweise umfasst der plattenförmige Grundkörper mindestens drei, noch typischer vier, an jeweiligen Kanten aneinandergrenzende Seitenflächen, wobei sich das mindestens eine Profilelement im Wesentlichen zwischen zwei der Kanten erstreckt. Außerdem ist typischerweise jede der Seitenflächen mit einem Profilelement fest verbunden. Dadurch ist der plattenförmige Grundkörper an allen Seiten von den Profilelementen umlaufend umgeben, z.B. im Wesentlichen vollständig umgeben. Dies er ermöglicht den einfachen Aufbau eines typischerweise regelmäßigen, z.B. im Wesentlichen quaderförmigen, Möbelstücks.

Der plattenförmigen Grundkörper weist typischerweise in einer Richtung, die parallel zur Grundfläche verläuft, eine erste Ausdehnung und in einer Normalenrichtung der Grundfläche eine zweite Ausdehnung auf, wobei die erste Ausdehnung mindestens 10-mal, noch typischer mindestens 50-mal, größer als die zweite Ausdehnung ist.

Gemäß einer Weiterbildung weist das mindestens eine Profilelement eine Ausdehnung in der Normalenrichtung der Grundfläche des plattenförmigen Grundkörper auf, die im Wesentlichen der zweiten Ausdehnung des plattenförmigen Grundkörpers entspricht. Dies ermöglicht einen im Wesentlichen bündigen Anschluss des Profileelements mit dem plattenförmigen Grundkörper. Dies erleichtert die Montage und / oder die Abdichtung des Möbelstücks.

Gemäß einem weiteren Ausführungsbeispiel umfasst ein Kreuzprofil zur Verbindung zweier Wandelemente zwei in Richtung einer Längsachse des Kreuzprofiles verlaufende Aussparungen zur Aufnahme einer Schlauchdichtung und mindestens zwei Durchgangslöcher, die senkrecht zu der Längsachse verlaufen und typischerweise senkrecht zueinander verlaufen. An einem derartigen Kreuzprofil können die zwei Wandelemente fest angeschraubt werden. Sie bilden dann typischerweise einen rechten Winkel. Außerdem können beim Verschrauben in die Aussparungen eingelegte Schlauchdichtungen luft - und/oder feuchtigkeitsdicht zwischen dem Kreuzprofil und dem jeweiligen Wandelement fixiert werden. Dies ermöglicht den einfachen Aufbau von hinreichend dichten Vitrinen, wie sie insbesondere im Museumsbereich für empfindliche Ausstellungsstücke benötigt werden.

Aus Stabilitätsgründen besteht das Kreuzprofil typischerweise aus einem Metall wie Aluminium oder Stahl.

Typischerweise ist das Kreuzprofil in mindestens einem die zwei Aussparungen umfassenden Querschnitt zu seiner Längsachse spiegelsymmetrisch bezüglich genau einer Spiegelachse.

Gemäß einer Weiterbildung entspricht eine Ausdehnung der zwei Aussparungen in Richtung der Längsachse im Wesentlichen einer Ausdehnung des Kreuzprofils in Richtung der Längsachse. Dies erleichtert die Abdichtung zwischen dem Kreuzprofil und den anliegenden Wandelementen.

Gemäß einem weiteren Ausführungsbeispiel umfasst ein Profil zur Verbindung zweier Wandelemente zwei senkrecht zueinander angeordnete Schenkel und zwei jeweils in Richtung einer Längsachse des Profils verlaufende Aussparungen zur Aufnahme einer Schlauchdichtung, wobei die zwei Schenkel jeweils mindestens ein Durchgangsloch aufweisen. An einem derartigen Profil können die zwei Wandelemente fest angeschraubt und über in die Aussparungen eingelegte Schlauchdichtungen abgedichtet werden. Dies ermöglicht den einfachen Aufbau von hinreichend dichten Vitrinen, wie sie insbesondere im Museumsbereich für empfindliche Ausstellungsstücke benötigt werden. Typischerweise entspricht eine Ausdehnung der zwei Aussparungen in Richtung der Längsachse im Wesentlichen einer Ausdehnung des Kreuzprofils in dieser Richtung.

Gemäß einem Ausführungsbeispiel umfasst ein Möbelstück mehrere paarweise mit einem Profil lösbar verbundene Wandelemente, die einen plattenförmigen Grundkörper, typischerweise aus Glas, mit einer Grundfläche und einer der Grundfläche gegenüberliegenden Deckfläche sowie mindestens eine zwischen der Grundfläche und der Deckfläche angeordnete Seitenfläche aufweisen. Dabei umfasst jedes Wandelement mindestens ein Profilelement mit mindestens einer Gewindebohrung. Das mindestens eine Profilelement ist derart fest mit der mindestens einen Seitenfläche verbunden, dass die mindestens eine Gewindebohrung in einer Normalenrichtung der mindestens einen Seitenfläche orientiert ist. Damit können Möbelstücke, insbesondere Glasvitrinen, einfach montiert bzw. wieder abgebaut werden. Zudem wird dabei das Risiko der Beschädigung des Wandelements bei der Montage bzw. Demontage reduziert und eine ggf. notwendige Reparatur des Möbelstücks vereinfacht.

Gemäß einer Weiterbildung umfasst das Möbelstück mehrere jeweils paarweise mit einem Profil lösbar verbundene Wandelemente. Dies ermöglicht den Aufbau eines stabilen Möbelstücks ohne einen festen Rahmen, dessen Teile zudem platzsparend verschickt werden können.

Gemäß einer Weiterbildung sind die Wandelemente mit dem Profil verschraubt. Dies ermöglicht eine besonders einfache Montage und Demontage des Möbelstücks. Typischerweise weist das Profil zwei Schenkel mit jeweils mindestens einem Durchgangsloch auf. Dies ermöglicht eine einfache lösbare Verbindung zwischen zwei Wandelementen und dem Profil. Dabei kann je ein Wandelement mit einem der zwei Schenkel, die typischerweise einen rechten Winkel bilden, über eine durch das jeweilige Durchgangsloch geführte und in die Gewindebohrung des entsprechenden Wandelements eingeschraubte Schraube verbunden sein. Außerdem kann das Profil zwei in Richtung seiner Längsachse verlaufende Aussparungen zur Aufnahme einer Schlauchdichtung aufweisen. Typischerweise sind die Durchgangslöcher senkrecht zu der Längsachse angeordnet.

Gemäß einer Weiterbildung ist eines, typischerweise mehrere, der Profile als ein Kreuzprofil, z.B. als ein rechtwinkliges Kreuzprofil, ausgebildet. Typischerweise weist das Kreuzprofil jeweils mindestens ein Durchgangsloch in zwei benachbarten seiner vier Schenkel auf. Außerdem kann das Kreuzprofil zwei in Richtung seiner Längsachse verlaufende Aussparungen zur Aufnahme einer Schlauchdichtung aufweisen. Typischerweise sind die Durchgangslöcher senkrecht zu der Längsachse angeordnet.

Typischerweise umfasst das Möbelstück jeweils eine in den zwei Aussparungen angeordnete Schlauchdichtung. Dadurch kann ein luft- und/oder feuchtigkeitsdichtes Möbelstück bereitgestellt werden.

Außerdem umfasst das Möbelstück typischerweise mindestens ein auf das Kreuzprofil einrastbares Clipprofil. Dies ermöglicht einen glatten Kantenabschluss. Außerdem kann ein zwischen dem Kreuzprofil und dem Clipprofil gebildeter Zwischenraum als Kabelkanal zur Stromversorgung interner oder externer Lampen und/oder Sensoren sowie für Signalleitungen für die Sensoren und/oder für Versorgungsleitungen zur Klimatisierung des Innenraums des Möbelstücks genutzt werden. Letzteres kann besonders für empfindliche Ausstellungsstücke in Museumsvitrinen interessant sein.

Eines oder mehrere der Profile des Möbelstücks können als L-förmiges Winkelprofil mit mindestens einem Durchgangsloch in jedem seiner beiden Schenkel ausgeführt sein. Dies ermöglicht ebenfalls eine einfache lösbare Verbindung zwischen dem Profil und zwei Wandelementen.

Gemäß einer Weiterbildung umfasst das Möbelstück mindestens zwei bezüglich ihrer Grundflächen parallel nebeneinander angeordnete Wandelemente, die mittels zweier zueinander parallel verlaufender und miteinander verschraubter Profile fixiert sind. Dies ermöglicht die Größe des Möbelstücks, z.B. die Breite, flexibel aus wenigen Wandelementen gleicher Geometrie aufzubauen.

Gemäß noch einer Weiterbildung umfasst das Möbelstück mindestens ein Scharnier, das lösbar mit den Profilelementen zweier benachbarter Wandelemente verbunden ist. Dies ermöglicht eines der benachbarten Wandelemente als Türelement auszuführen.

Dazu ist typischerweise eines der beiden benachbarten Wandelemente mit dem Profil und dem Scharnier verschraubt und das diesem Wandelement zugewandte Profilelement des zweiten der beiden benachbarten Wandelemente nur mit dem Scharnier verschraubt. Dies ermöglicht eine besonders einfache Realisierung eines Türelements des Möbelstücks.

Typischerweise ist das Möbelstück eine quaderförmige Glasvitrine mit mindestens 5 Wandelementen, deren plattenförmiger Grundkörper von einer jeweiligen Glasplatte gebildet wird. Beispielsweise können die vier Seitenflächen sowie die Deckfläche und/oder die Grundfläche von einem oder mehreren Wandelementen mit einer Glasplatte als plattenförmiger Grundkörper gebildet werden.

Gemäß noch einem Ausführungsbeispiel umfasst ein Bausatz für ein Möbelstück mehrere paarweise mit einem Profil lösbar verbindbare Wandelemente, die einen plattenförmigen Grundkörper, typischerweise aus Glas, mit einer Grundfläche und einer der Grundfläche gegenüberliegenden Deckfläche sowie mindestens eine zwischen der Grundfläche und der Deckfläche angeordnete Seitenfläche aufweisen. Dabei umfasst jedes Wandelement mindestens ein Profilelement mit mindestens einer Gewindebohrung. Das mindestens eine Profilelement ist derart fest mit der mindestens einen Seitenfläche verbunden, dass die mindestens eine Gewindebohrung in einer Normalenrichtung der mindestens einen Seitenfläche orientiert ist. Damit können Möbelstücke, insbesondere Glasvitrinen, einfach montiert bzw. wieder abgebaut sowie platzsparend in leicht montierbaren und/oder konfektionierbaren Einzelteilen verschickt werden.

Typischerweise umfasst der Bausatz für das Möbelstück mehrere Profile umfassend zwei typischerweise senkrecht zueinander angeordnete Schenkel mit mindestens einem Durchgangsloch in jedem der zwei Schenkel, mehrere Kreuzprofile mit jeweils mindestens einem Durchgangsloch in zwei benachbarten seiner vier Schenkel, und/oder mehrere Kreuzprofile mit in Richtung ihrer Längsachse verlaufenden Aussparungen zur Aufnahme einer Schlauchdichtung und mindestens zwei senkrecht zur Längsachse und zueinander verlaufenden Durchgangslöchern, und/oder mehrere L-förmige Winkelprofile mit mindestens einem Durchgangsloch in jedem seiner beiden Schenkel, und/oder mindestens ein Scharnier zur Realisierung eines Türelements, und/oder mindestens ein Clipprofil zum Abschluss einer Kante zwischen zwei der mehreren Wandelemente, und/oder mindestens eine Schlauchdichtung, die in eine Aussparungen eines der mehreren Kreuzprofile einlegbar ist, und/oder mindestens eine Schlauchdichtung, die in eine Aussparungen eines der mehreren Profile einlegbar ist. Dadurch kann ein flexibler Bausatz zum Aufbau des Möbelstücks, insbesondere für Glasvitrinen bereitgestellt werden.

Weitere Merkmale und Vorteile der Erfindung ergeben sich aus der nachstehenden Beschreibung, in der die Ausführungsbeispiele der Erfindung anhand schematischer Zeichnungen im Einzelnen erläutert werden. Dabei zeigt:
Fig. 1A einen schematischen Querschnitt durch ein Wandelement während der Herstellung gemäß einer Ausführungsform;
Fig. 1B einen schematischen Querschnitt durch ein Wandelement gemäß einer Ausführungsform;
Fig. 1C einen plattenförmigen Grundkörper eines Wandelements gemäß einer Ausführungsform in einer perspektivischen Ansicht;
Fig. 1D ein Wandelement gemäß einer Ausführungsform in einer perspektivischen Ansicht;
Fig. 1E einen schematischen Querschnitt durch ein Wandelement gemäß einer Ausführungsform;
Fig. 2A einen schematischen Querschnitt zweier über ein L-förmiges Profil zu montierende Wandelemente gemäß einer Ausführungsform;
Fig.2B einen schematischen Querschnitt der zwei über das L-förmiges Profil montierten Wandelemente aus Fig. 2A gemäß einer Ausführungsform;
Fig. 3A einen schematischen Querschnitt zweier über ein Kreuzprofil zu montierende Wandelemente gemäß einer Ausführungsform;
Fig. 3B einen schematischen Querschnitt der zwei über das Kreuzprofil montierten Wandelemente aus Fig. 3A gemäß einer Ausführungsform;
Fig. 4A einen schematischen Querschnitt zweier über ein Kreuzprofil zu montierende und mittels zweier Schlauchdichtungen abzudichtende Wandelemente gemäß einer Ausführungsform;
Fig. 4B einen schematischen Querschnitt der zwei über das Kreuzprofil montierten und mittels der zwei Schlauchdichtungen abgedichteten Wandelemente aus Fig. 4A gemäß einer Ausführungsform;
Fig. 5A einen schematischen Querschnitt zweier über ein Kreuzprofil zu montierende und mittels zweier Schlauchdichtungen abzudichtende Wandelemente sowie ein anzubringendes Clipprofil gemäß einer Ausführungsform;
Fig. 5B einen schematischen Querschnitt der zwei über das Kreuzprofil montierten und mittels der zwei Schlauchdichtungen abgedichteten und mit dem Clipprofil versehenen Wandelemente aus Fig. 5A gemäß einer Ausführungsform;
Fig. 5C einen schematischen Querschnitt zweier über ein Kreuzprofil zu montierende und mittels zweier Schlauchdichtungen abzudichtende Wandelemente sowie ein anzubringendes Clipprofil gemäß einer Ausführungsform;
Fig. 6A eine perspektivische Ansicht eines Kreuzprofils gemäß einer Ausführungsform;
Fig. 6B eine perspektivische Ansicht des Kreuzprofils aus Figur 6A mit eingelegten Schlauchdichtungen gemäß einer Ausführungsform;
Fig. 7 eine perspektivische Ansicht eines Möbelstücks gemäß einer Ausführungsform;
Fig. 8 eine schematische Explosionsansicht eines Teils des Möbelstücks aus Fig. 7 gemäß einer Ausführungsform;
Fig. 9 einen schematischen Querschnitt durch einen Teil eines Möbelstücks mit einem Scharnier in einem geschlossenen Zustand gemäß einer Ausführungsform;
Fig. 10 einen schematischen Querschnitt durch einen Teil des Möbelstücks aus Fig. 7 mit einem Scharnier in einem geöffneten Zustand gemäß einer Ausführungsform;
Fig. 11 eine perspektivische Ansicht des Möbelstücks aus Fig. 7 gemäß einer Ausführungsform;
Fig. 12 einen schematischen Querschnitt zweier über zwei Profile in linearer Fortführung zueinander montierter Wandelemente gemäß einer Ausführungsform; und
Fig. 13 eine perspektivische Ansicht eines Möbelstücks gemäß einer Ausführungsform.

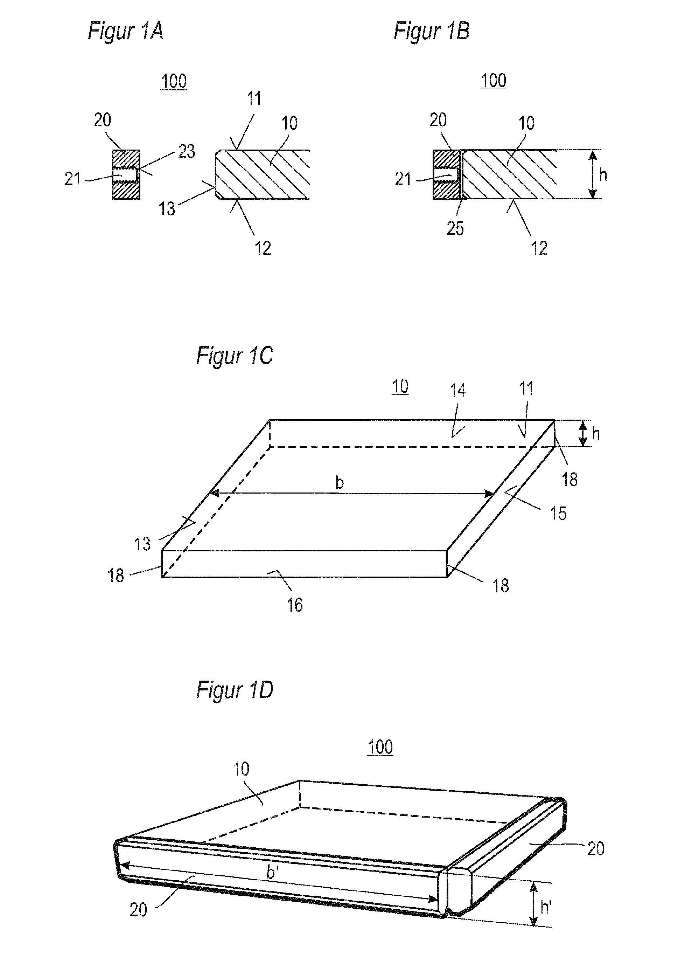

Fig. 1A zeigt einen schematischen Querschnitt durch ein Wandelement 100 für ein Möbelstück während der Herstellung. Das Wandelement 100 hat einen plattenförmigen Grundkörper 10, der typischerweise aus Glas besteht, d.h. typischerweise als eine Glasscheibe ausgebildet ist, mit einer Grundfläche 12, einer der Grundfläche 12 gegenüberliegenden Deckfläche 11 sowie mehrere, typischerweise vier, jeweils zwischen der Grundfläche 12 und der Deckfläche 11 angeordnete Seitenflächen, von denen in Figur 1A jedoch nur eine Seitenfläche 13 gezeigt wird. Auf jeder der Seitenflächen 13 wird während der Herstellung ein Profilelement 20 mit mindestens einer Gewindebohrung 21 fest aufgebracht.

Aus Stabilitätsgründen sind typischerweise mindestens zwei zueinander parallel orientierte und bezüglich der Richtung einer Längsachse des Profilelements, die zur gezeigten Querschnittsebene im Wesentlichen senkrecht verläuft, hintereinander angeordneten Gewindebohrungen 21 in den Profilelementen 20 vorgesehen.

Typischerweise ist die Gewindebohrung 21 des Profilelements 20 nicht durchgängig. Dadurch wird das Risiko der Beschädigung des Grundkörpers 10 beim Verschrauben während der späteren Montage des Möbelstücks verringert. Insbesondere bei Verwendung hinreichend kurzer Schrauben für die Gewindebohrung 21 bei der späteren Montage des Möbelstücks kann die Gewindebohrung 21 aber auch durchgängig ausgeführt sein.

Die Gewindebohrung 21 kann direkt in das Grundmaterial des Profilelements 20 eingearbeitet sein, z.B. in das Grundmaterial geschnitten sein, oder - insbesondere bei Verwendung eines relativ weichen Grundmaterials wie Aluminium - durch ein Stahlgewinde, das z.B. in ein entsprechendes Sackloch des Profilelements 20 eingeschlagen wurde, bereitgestellt werden.

Zum Ausbilden eines Verbunds zwischen dem Profilelement 20 und dem Grundkörper 10 wird zunächst eine typischerweise ebene Oberfläche 13 des Profilelements 20 parallel zur Seitenfläche 13 orientiert.

Danach kann eine Klebeschicht 25 auf die Seitenfläche 13 und / oder die Oberfläche 13 des Profilelements 20 aufgebracht werden. Anschließend werden die Seitenfläche 13 und die Oberfläche 13 des Profilelements 20 über die Klebeschicht 25, typischerweise planparallel zueinander, fest miteinander verbunden. Das daraus resultierende Wandelement 100 wird in Fig. 1B gezeigt.

Typischerweise wird das Profilelement 20 in vertikalen Querschnitten, d.h. in Querschnitten, die im Wesentlichen orthogonal zur Grundfläche 12 bzw. der Deckfläche 11 verlaufen, im Wesentlichen bündig mit dem Grundkörper 10 verbunden. Dadurch kann die spätere Montage des Möbelstücks vereinfacht werden.

Dementsprechend entspricht die vertikale Ausdehnung h' des Profilelements 20 typischerweise im Wesentlichen der vertikalen Ausdehnung h des Grundkörpers 10, wie es auch die perspektivische Ansicht des Wandelements 100 in Fig. 1D zeigt. Aus Gründen der Übersichtlichkeit sind in Fig. 1D nur zwei der vier Profilelemente 20 und diese ohne die seitlich zugänglichen Gewindebohrungen dargestellt.

Der plattenförmige Grundkörper 10 des Wandelements 100 ist typischerweise im Wesentlichen quaderförmig. Dies wird in Fig. 1C für den exemplarischen plattenförmigen Grundkörper 10 mit im Wesentlichen quadratischer Deckfläche 11 und vier paarweise an Kanten 18 aneinandergrenzenden Seitenflächen 13, 14, 15, 16 gezeigt. Die Deckfläche 11 kann aber auch dreieckig und insbesondere rechteckig mit zwei unterschiedlich großen horizontalen Ausdehnungen b sein. Außerdem sind die horizontalen Ausdehnungen b des Grundkörpers 10 typischerweise wesentlich größer als seine vertikale Ausdehnung h, z.B. mindestens 10-mal, typischerweise mindestens 50-mal größer.

Typischerweise entspricht die horizontale Ausdehnung b' des Profilelements 20, d.h. die Ausdehnung des Profilelements in Richtung seiner Längs- bzw. Profilachse, im Wesentlichen der horizontalen Ausdehnung b der Seitenfläche 16, an der das Profilelements 20 befestigt ist.

Dadurch kann zum einen eine besonders große Verbundfläche und damit eine besonders stabile Verbindung zwischen dem Profilelement 20 und dem Grundkörper 10 gewährleistet werden. Zum anderen sind damit alle Seitenflächen 13, 14, 15, 16 zumindest in mindestens einem horizontalen Schnitt nahezu vollständig bzw. umlaufend von den Profilelementen 20 umgeben. Dadurch kann die Abdichtung des aufzubauenden Möbelstücks erleichtert werden.

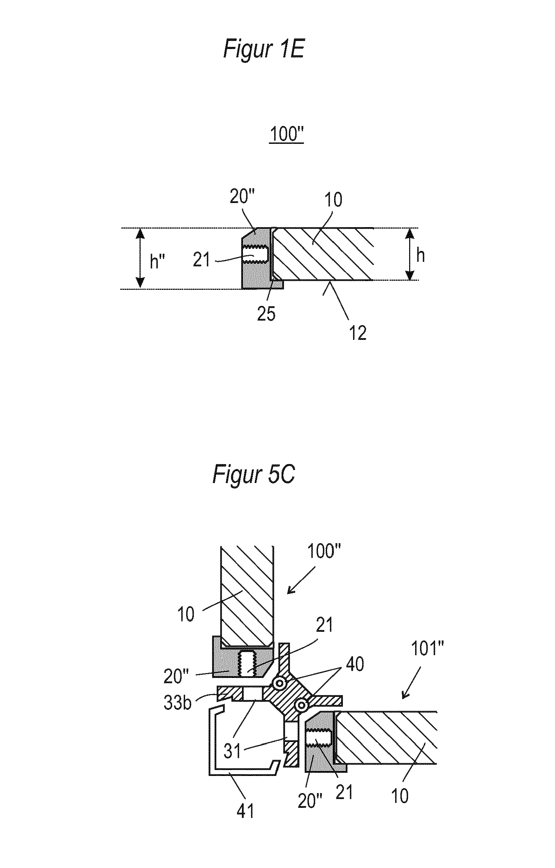

Fig. 1E zeigt einen schematische Querschnitt durch ein Wandelement 100" gemäß einer Ausführungsform. Das Wandelement 100" ist analog wie das mit Bezug zur Figur 1D erläuterte Wandelement 100 aufgebaut. Das Profilelements 20" des Wandelements 100" weist jedoch einen Anschlagsbereich bzw. Verbindungsbereich auf, der in einem zur Längsachse des Profilelements 20" orthogonalen Querschnitt L-förmigen ist. Dementsprechend ist in dieser Ausführungsform die vertikale Ausdehnung h" des Profilelements 20" größer als die vertikale Ausdehnung h des Grundkörpers 10. Der L-förmige Anschlagsbereich des Profilelements 20" vereinfacht zum einen die Fertigung des Wandelements 100", da das Profilelement 20" und der Grundkörpers 10 einfacher zueinander justiert werden können. Zum anderen umgibt der L-förmigen Anschlagsbereich des Profilelements 20" eine Kante zwischen der Grundfläche 12 bzw. Deckfläche und der Seitenfläche des plattenförmigen Grundkörpers 10, auf die das Profilelement 20" aufgeklebt ist. Dadurch ist diese Kante gut gegenüber Beschädigungen geschützt. Zudem kann sich auch die Verbindungs- bzw. Klebeschicht 25 zwischen dem Profilelement 20" und dem Grundkörper 10 bis auf die Grundfläche 12 bzw. Deckfläche erstrecken. Dadurch kann die Stabilität des Verbundes zwischen dem Grundkörper 10 und dem Profilelement 20" noch weiter erhöht werden.

Außerdem ist eine äußere Kante des Profilelements 20"des Wandelements 100" auf der der Klebeschicht 25 abgewandten Seite abgeschrägt. Dadurch kann eine geeignete Auflagefläche für eine Dichtung bereitgestellt werden.

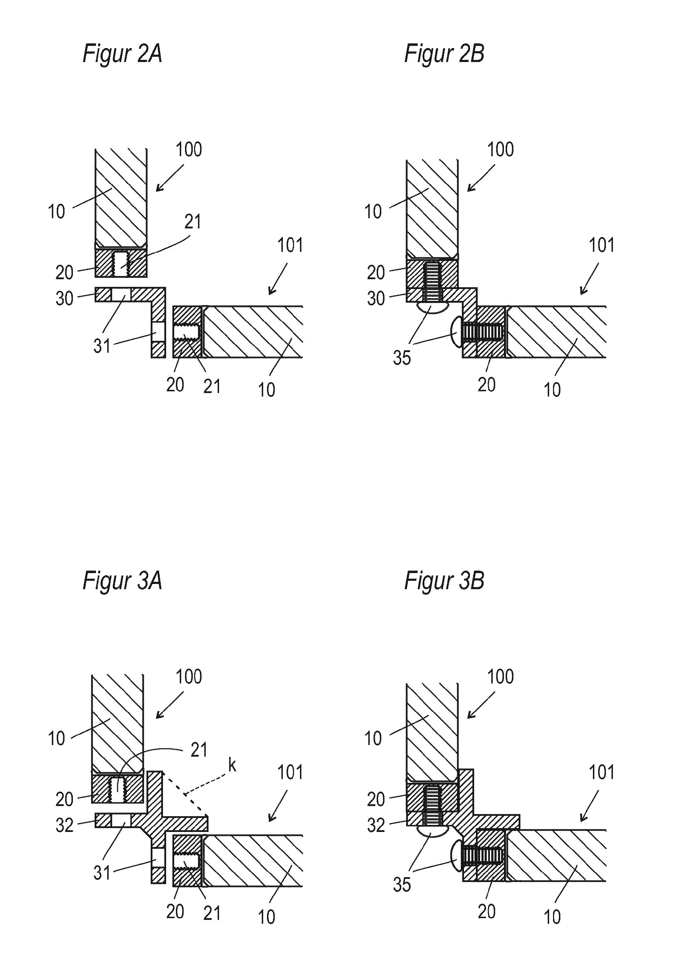

Fig. 2A zeigt einen schematischen Querschnitt zweier zum Aufbau eines Möbelstücks über ein L-förmiges Profil 30 zu montierende Wandelemente 100, 101, die beide wie das oben mit Bezug zu den Figuren 1A bis 1D erläuterte Wandelement 100 aufgebaut sind. Gemäß einer Ausführungsform hat das L-förmige Winkelprofil 30 in jedem seiner beiden Schenkel eins oder mehrere, in Richtung der Profilachse hintereinander angeordnete Durchgangslöcher 31, die typischerweise als Durchbohrungen ausgeführt sind.

Über die Durchgangslöcher 31 können die beiden Wandelemente 100, 101 mittels Schrauben 35 einfach lösbar und stabil mit dem Profil 30 verbunden werden. Dadurch werden die beiden Wandelemente 100, 101 typischerweise rechtwinklig zueinander fixiert, wie in Fig. 2B gezeigt wird.

Fig. 3A zeigt einen schematischen Querschnitt zweier zum Aufbau eines Möbelstücks über ein Kreuzprofil 32 zu montierende Wandelemente 100, 101, die beide wie das oben mit Bezug zu den Figuren 1A bis 1D erläuterte Wandelement 100 aufgebaut sind. Gemäß einer Ausführungsform hat das Kreuzprofil 32 in zwei benachbarten seiner vier Schenkel eins oder mehrere, in Richtung der Profilachse des Kreuzprofils 32 hintereinander angeordnete Durchgangslöcher 31, die typischerweise als Durchbohrungen ausgeführt sind. Das Kreuzprofil 32 stellt, wie das in Fig. 2A gezeigte L-förmige Profil 30, ein Profil mit zwei Schenkeln, die jeweils mindestens ein Durchgangsloch 31 aufweisen und rechtwinklig zueinander angeordnet sind, dar. Neben Kreuzprofilen und L-förmigen Profilen können aber auch andere Profile mit zwei Schenkeln, die jeweils mindestens ein Durchgangsloch aufweisen und rechtwinklig zueinander angeordnet sind, zum Aufbau des Möbelstücks verwendet werden. Beispielsweise können die in Fig. 3A innenliegenden Schenkel des Kreuzprofils 32 im gezeigten Querschnitt durch ein Dreieck ergänzt sein, wie es durch die gestrichelte Linie k gezeigt wird.

Über die Durchgangslöcher 31 können die beiden Wandelemente 100, 101 mittels Schrauben 35 stabil und einfach lösbar mit dem Kreuzprofil 32 verbunden werden. Dadurch werden die beiden Wandelemente 100, 101 typischerweise rechtwinklig zueinander fixiert, wie in Fig. 3B gezeigt wird.

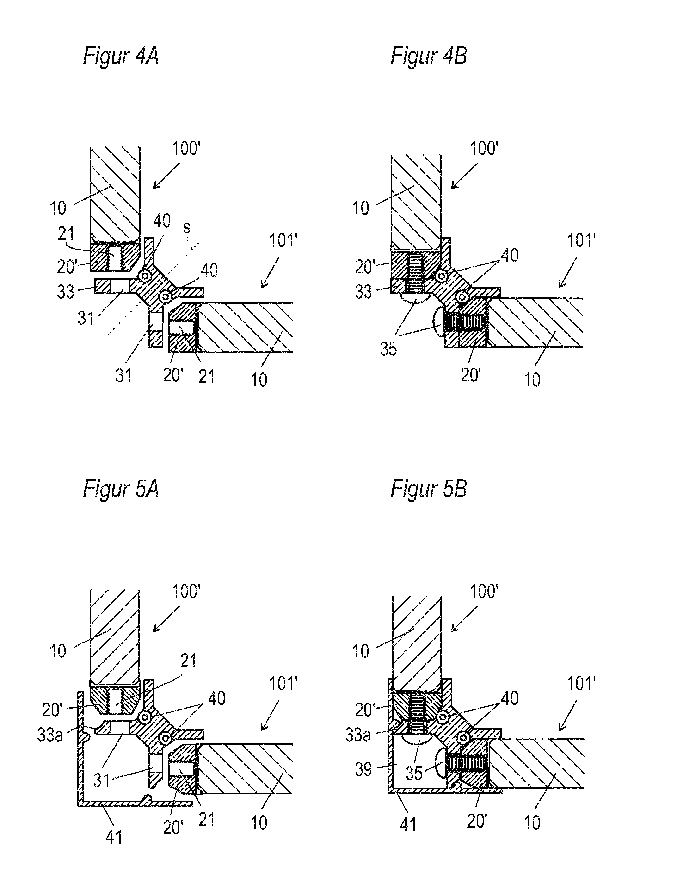

Fig. 4A zeigt einen schematischen Querschnitt zweier zum Aufbau eines Möbelstücks über ein Kreuzprofil 33 zu montierende und mittels zweier Schlauchdichtungen 40 abzudichtende Wandelemente 100', 101', die beide analog wie das oben mit Bezug zu den Figuren 1A bis 1D erläuterte Wandelement 100 aufgebaut sind. Eine Kante des Profilelements 20' der Wandelemente 100', 101' ist jedoch abgeschrägt, um eine glatte Auflagefläche für die jeweilige Schlauchdichtung 40 bereitzustellen. Gemäß einer Ausführungsform hat das Kreuzprofil 33 in zwei benachbarten seiner vier Schenkel jeweils eins oder mehrere, in Richtung der Profilachse des Kreuzprofils 33 hintereinander angeordnete Durchgangslöcher 31, die typischerweise als Durchbohrungen ausgeführt sind. Das Kreuzprofil 33 stellt damit ebenfalls ein Profil mit zwei Schenkeln, die jeweils mindestens ein Durchgangsloch 31 aufweisen und rechtwinklig zueinander angeordnet sind, dar. Außerdem hat das Kreuzprofil 33 zwei Aussparungen, in die die Schlauchdichtungen 40 eingelegt werden können.

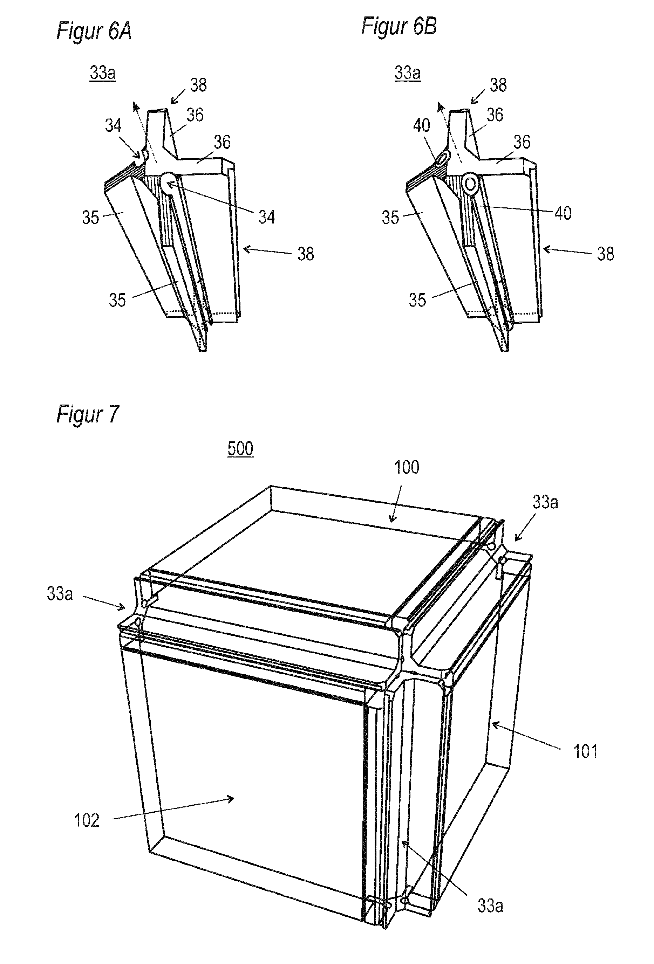

Dies wird auch in jeweiligen perspektivischen Ansichten in den Figuren 6A und 6B gezeigt, in denen die Profil- bzw. Längsachse für ein ähnliches Kreuzprofil 33a als gestrichelter Pfeil dargestellt ist. Aus Gründen der Übersichtlichkeit ist in den Figuren 6A und 6B auf eine Darstellung der Durchgangslöcher in den Profilschenkeln 36 verzichtet worden. Außerdem weisen die äußeren Enden der Profilschenkel 36 des Kreuzprofils 33a einen Vorsprung 38 zur Aufnahme eines Clipprofils auf.

Typischerweise erstrecken sich die Aussparungen 34 zwischen den jeweiligen Profilschenkeln 35, 36 im Wesentlichen durchgängig entlang der Profilachse. Dies ermöglicht eine gute Abdichtung des Innenraumes des aufzubauenden Möbelstücks.

Wie Fig. 4A außerdem zeigt, ergibt sich damit ein Kreuzprofil 33, 33a, das in mindestens einem, die zwei Aussparungen 34 umfassenden Querschnitt spiegelsymmetrisch bezüglich genau einer Spiegelachse s ist.

Über die Durchgangslöcher 31 können die beiden Wandelemente 100', 101' mittels Schrauben 35 stabil und einfach lösbar mit dem Profil 33 verbunden werden. Dadurch werden die beiden Wandelemente 100', 101' typischerweise rechtwinklig zueinander fixiert, wie in Fig. 4B gezeigt wird.

Es versteht sich, dass entsprechende Aussparungen für Schlauchdichtungen, die in Richtung der Längsachse verlaufen, auch für andere Profile mit zwei Schenkeln vorgesehen sein können. Beispielsweise könnten die oben mit Bezug zu den Figuren 2A, 2B erläuterten L-Profile ebenfalls mindestens eine Aussparung je Schenkel aufweisen.

Fig. 5A zeigt einen schematischen Querschnitt zweier zum Aufbau eines Möbelstücks über das Kreuzprofil 33a zu montierende und mittels zweier Schlauchdichtungen 40 abzudichtende Wandelemente 100', 101' sowie ein anzubringendes rechtwinkliges Clipprofil 41. Das Kreuzprofil 33a stellt ebenfalls ein Profil mit zwei Schenkeln, die jeweils mindestens ein Durchgangsloch 31 aufweisen und rechtwinklig zueinander angeordnet sind, dar. Über die Durchgangslöcher 31 in den beiden äußeren Schenkeln des Kreuzprofils 33a können die beiden Wandelemente 100', 101' mittels Schrauben 35 einfach lösbar und stabil mit dem Profil 33a verbunden werden, wie in Fig. 5B gezeigt ist.

Außerdem kann das Clipprofil 41 an den Vorsprüngen (38, siehe Figuren 6A und 6B) befestigt und damit lösbar mit dem Kreuzprofil 33a verbunden werden. Alternativ dazu kann ein rechtwinkliges Abschlussprofil 41 auch mit anderen ablösbaren und/oder adhäsiven Techniken, z.B. mittels Klettband oder Blenden, befestigt werden.

Auf diese Weise wird sowohl ein glatter Kantenabschluss als auch ein länglicher Zwischenraum 39 zwischen dem Kreuzprofil 33a und dem Clipprofil 41 gebildet. Der Zwischenraum 39 kann bspw. als Kabelkanal zur Stromversorgung interner Lampen und/oder Sensoren sowie für Signalleitungen für die Sensoren und/oder für Versorgungsleitungen zur Klimatisierung des Innenraums des Möbelstücks genutzt werden. Letzteres kann besonders für empfindliche Ausstellungsstücke in Museumsvitrinen interessant sein.

Die Wandelemente 100', 101' sind analog wie das oben mit Bezug zu den Figuren 1A bis 1D erläuterte Wandelement 100 aufgebaut. Zwei Kanten des jeweiligen Profilelements 20' sind jedoch abgeschrägt, um zum einen eine glatte Auflagefläche für die jeweilige Schlauchdichtung 40 bereitzustellen und zum anderen das Befestigen des jeweiligen Clipprofils 41 zu erleichtern.

Fig. 5C zeigt in einem schematischen Querschnitt eine weitere Ausführungsform zweier zum Aufbau eines Möbelstücks über ein Kreuzprofil 33b zu montierende und mittels zweier Schlauchdichtungen 40 abzudichtende Wandelemente 100", 101", die beide wie das oben mit Bezug zur Figur 1E erläuterte Wandelement 100" aufgebaut sind. In dieser Ausführungsform kann ein im Wesentlichen rechtwinkliges Clipprofil 41 in gegenüberliegenden Vertiefungen der Durchgangslöcher 31 aufweisenden Schenkel des Kreuzprofil 33b befestigt werden.

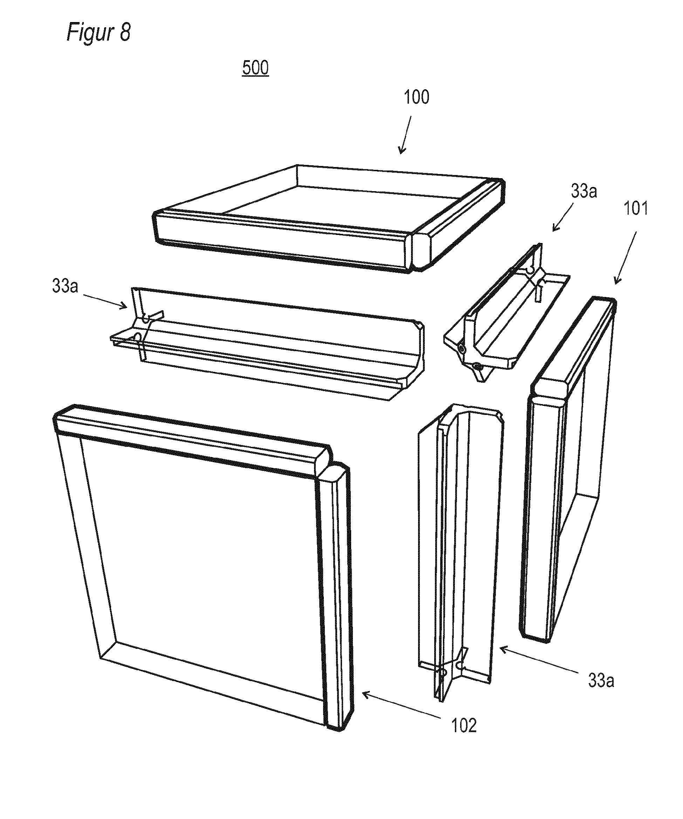

Fig. 7 zeigt eine perspektivische Ansicht eines im Wesentlichen quaderförmigen Möbelstücks 500, das typischerweise eine Glasvitrine, insbesondere für Museumszwecke darstellt. Fig. 8 zeigt das Möbelstück 500 zur Verdeutlichung in einer vereinfachten Explosionsansicht. In der exemplarischen Ausführungsform besteht das Möbelstück 500 aus sechs Wandelementen, von denen aber nur die drei Wandelemente 100, 101 und 102 dargestellt sind. Wie oben mit Bezug zu den Figuren 2A bis 6B erläutert wurde, sind die Wandelemente 100, 101, 102 jeweils paarweise mit einem Profil 33a lösbar über Schraubverbindungen verbunden. Dies ermöglicht einen einfachen Aufbau und Abbau des Möbelstücks 500 sowie ein platz- und kostensparenden Transport des Möbelstücks als entsprechender Bausatz.

Wie oben mit Bezug zu den Figuren 4A bis 5C erläutert wurde, sind die Wandelemente 100, 101, 102 typischerweise derart paarweise mit einem jeweiligen Kreuzprofil 33a verschraubt, dass auf Grund der eingelegten Schlauchdichtungen eine luft- und feuchtigkeitsdichte Glasvitrine 500 bereitgestellt werden kann. Dazu sind entsprechende Kanten der jeweiligen Profilelemente der Wandelemente 100, 101, 102 typischerweise abgeschrägt, um eine glatte Auflagefläche für die Schlauchdichtungen zu ermöglichen, wie dies mit Bezug zu den Figuren 4A bis 5C erläutert wurde.

Aus Gründen der Übersichtlichkeit wurde in den Figuren 7 und 8 auf eine Darstellung von Details wie die Durchgangslöcher, Schrauben, die optionalen Schlauchdichtungen und die optionalen Clipprofile verzichtet.

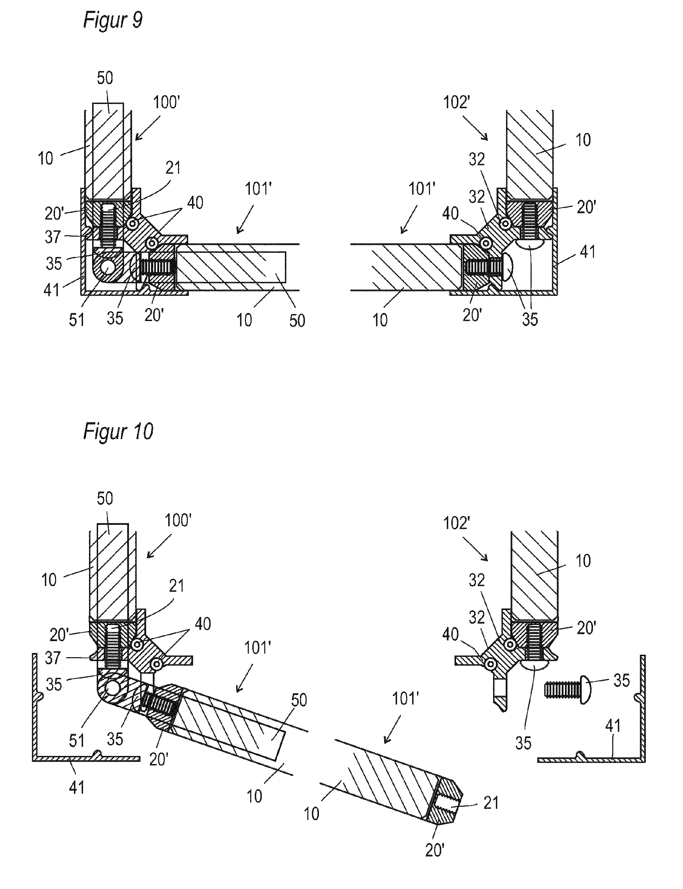

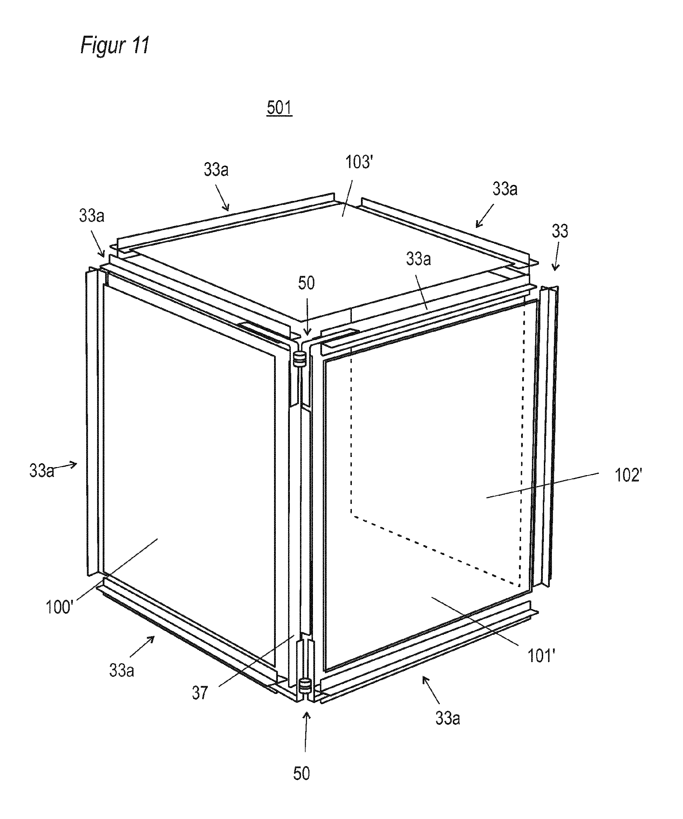

Die Figuren 9 und 10 zeigen schematische Querschnitte durch einen Teil eines analog zum Möbelstück 500 aufgebauten Möbelstücks 501 mit zwei Scharnieren 50, die jeweils einen Drehbolzen 51 aufweisen, in einem geschlossenen und einem geöffneten Zustand. Zur Verdeutlichung zeigt Figur 11 eine vereinfachte perspektivische Ansicht des Möbelstücks 501, wobei nur vier Wandelemente 100', 101', 102' und 103' der typischerweise sechs Wandelemente dargestellt sind.

Typischerweise werden die beiden Scharniere 50 mit jeweils einem Profilelement 20' eines Wandelements 101' verschraubt, das selbst nicht mit dem Kreuzprofil 37 verschraubt wird, mit dem ein angrenzendes Wandelement 100' verschraubt ist. Mit dem angrenzenden Wandelement 100' sind die Scharniere 50 ebenfalls verschraubt, wodurch sie typischerweise auch mit dem Kreuzprofil 37 verschraubt sind.

Dies ermöglicht, dass das von den Scharnieren 50 gehaltene Wandelement 101' wie eine Tür geöffnet werden kann, nachdem die das Wandelement 101' umgebenden Clipprofile 41 entfernt und die Schrauben 35 zwischen dem Wandelement 101' und dem, zwischen dem Wandelement 101' und dem dem angrenzenden Wandelement 100' gegenüberliegenden Wandelement 102' angeordneten, Kreuzprofil 33 gelöst wurden. Dies ist in Figur 10 verdeutlicht.

Dadurch kann ein Türelement bereitgestellt werden, wodurch der Austausch von Exponaten in der Glasvitrine 501 erleichtert wird.

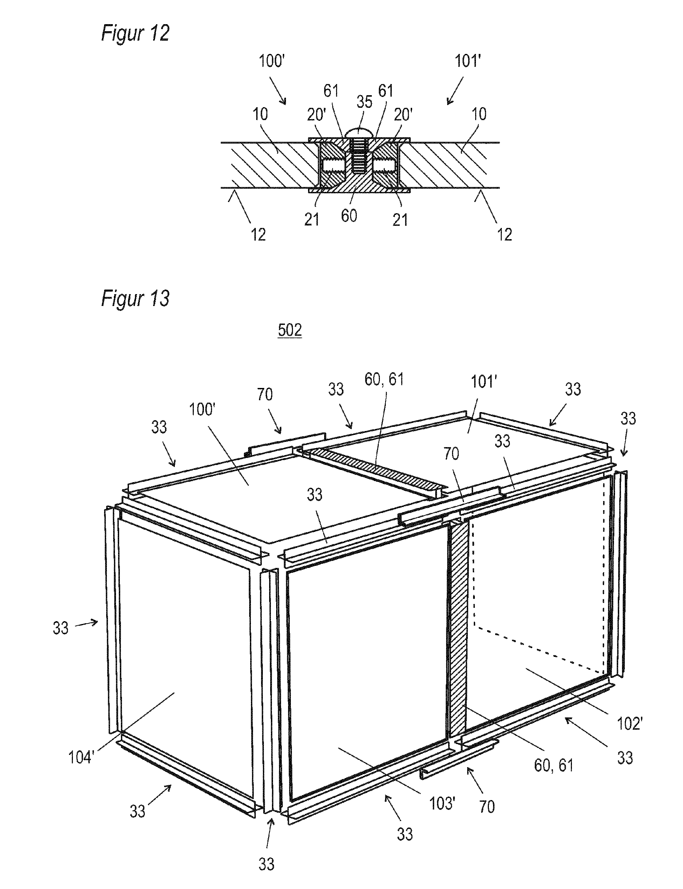

Fig. 12 zeigt einen schematischen Querschnitt zweier über zwei Profile 60, 61 in linearer Fortführung zueinander montierte Wandelemente 100', 101'. Die beiden Wandelemente 100', 101' sind außerdem fluchtend zueinander angeordnet und nicht an die dazwischen angeordneten Profile 60, 61 geschraubt. Vielmehr werden die beiden Wandelemente 100', 101' in dieser Ausführungsform mittels der parallel verlaufenden und miteinander über eine oder mehrere Schrauben 35 verschraubten Profile 60, 61 fixiert. Dies ermöglicht aus zwei Wandelementen 100', 101' eine größere im Wesentlichen ebene Seitenwand für eine Vitrine aufzubauen. Dies wird mit Bezug zur Figur 13 näher erläutert.

Fig. 13 zeigt eine vereinfachte perspektivische Ansicht einer Vitrine 502, bei deren Darstellung auf Details wie die Durchgangslöcher, Schrauben, die optionalen Schlauchdichtungen und die optionalen Clipprofile ebenfalls verzichtet wurde. Die Vitrine 502 ist ähnlich aufgebaut wie die oben mit Bezug zu den Figuren 7, 8 und 11 erläuterten Möbelstücke 500 und 501.

In dem exemplarischen Ausführungsbeispiel ist die Vitrine 502 aus 10 identischen Wandelementen 100'-104' mit im Wesentlichen quadratischer Grundfläche aufgebaut, von denen in Figur 13 jedoch nur ein Teil dargestellt ist. Da acht der 10 Wandelemente 100'-104' - wie mit Bezug zu Figur 12 erläutert - in jeweiligen Paaren (100', 101'), (102', 103') in linearer Fortführung zueinander fixiert sind, kann dennoch eine im Wesentlichen langegestreckte Glasvitrine 502 aufgebaut werden. Dies verringert die Herstellungskosten der Vitrine 502 und vereinfacht zudem die Logistik, da im entsprechenden Bausatz weniger verschiedene Wandelemente benötigt werden.

Aus Stabilitätsgründen werden typischerweise zusätzliche Winkelprofile 70 auf bzw. zwischen koaxial verlaufenden Kreuzprofilen 33, die auch als Kreuzprofile 33a, 33b ausgeführt sein können, geschraubt.

Die vorliegende Erfindung wurde anhand von Ausführungsbeispielen erläutert. Diese Ausführungsbeispiele sollten keinesfalls als einschränkend für die vorliegende Erfindung verstanden werden.

## Patentansprüche

1. Wandelement (100, 100', 100") für ein Möbelstück (500), insbesondere eine Vitrine, umfassend:
• einen plattenförmigen Grundkörper (10) aus Glas mit einer Grundfläche (12) und einer zur Grundfläche (12) gegenüberliegenden Deckfläche (11) sowie mindestens einer zwischen der Grundfläche (12) und der Deckfläche (11) angeordneten Seitenfläche (13, 14, 15, 16); und,
• mindestens ein Profilelement (20, 20', 20") mit mindestens einer Gewindebohrung (21),
wobei das mindestens ein Profilelement (20) derart fest mit der mindestens einen Seitenfläche (13, 14, 15, 16) verbunden ist, dass die mindestens eine Gewindebohrung (21) in einer Normalenrichtung der mindestens einen Seitenfläche (13, 14, 15, 16) orientiert ist.

2. Wandelement (100, 100', 100") nach Anspruch 1, wobei das mindestens eine Profilelement (20, 20', 20") auf die mindestens eine Seitenfläche (13, 14, 15, 16) aufgeklebt ist.

3. Wandelement (100, 100', 100") nach einem der vorangegangen Ansprüche, wobei der Grundkörper (10) mindestens drei an jeweiligen Kanten (18) aneinandergrenzende Seitenflächen (13, 14, 15, 16) umfasst, und wobei sich das mindestens eine Profilelement (20, 20', 20") im Wesentlichen zwischen zwei der Kanten (18) erstreckt.

4. Wandelement (100, 100', 100") nach einem der vorangegangen Ansprüche, wobei der Grundkörper (10) vier paarweise aneinandergrenzende Seitenflächen (13, 14, 15, 16) umfasst, auf die jeweils mit einem Profilelement (20, 20', 20") fest verbunden sind.

5. Wandelement (100, 100', 100") nach einem der vorangegangen Ansprüche, wobei der plattenförmigen Grundkörper (10) in einer Richtung, die parallel zur Grundfläche (12) verläuft, eine erste Ausdehnung (b) aufweist, wobei der plattenförmigen Grundkörper (10) eine zweite Ausdehnung (h) in einer Normalenrichtung der Grundfläche (12) aufweist, und wobei die erste Ausdehnung (b) mindestens 10 mal größer als die zweite Ausdehnung (h) ist.

6. Wandelement (100, 100', 100") nach Anspruch 5, wobei das mindestens eine Profilelement (20, 20', 20") eine Ausdehnung (h') in der Normalenrichtung der Grundfläche (12) aufweist, die im Wesentlichen der zweiten Ausdehnung (h) entspricht.

7. Kreuzprofil (33, 33a, 33b, 37) zur Verbindung zweier Wandelemente (100) nach einem der vorangegangen Ansprüche, umfassend zwei in Richtung einer Längsachse des Kreuzprofiles verlaufende Aussparungen (34) zur Aufnahme einer Schlauchdichtung (40) und mindestens zwei Durchgangslöcher (31), die senkrecht zu der Längsachse verlaufen.

8. Kreuzprofil (33, 33a, 33b, 37) nach Anspruch 7, wobei eine Ausdehnung der zwei Aussparungen (34) in Richtung der Längsachse im Wesentlichen einer Ausdehnung des Kreuzprofils (32) in Richtung der Längsachse entspricht.

9. Kreuzprofil (33, 33a, 33b, 37) nach Anspruch 7 oder 8, wobei das Kreuzprofil (33, 33a, 33b, 37) in mindestens einem die zwei Aussparungen (34) umfassenden Querschnitt zu seiner Längsachse spiegelsymmetrisch bezüglich genau einer Spiegelachse (s) ist.

10. Möbelstück (500, 501, 502), umfassend mehrere Wandelemente (100 - 104) gemäß einem der Ansprüche 1 bis 6, die jeweils paarweise mit einem Profil (30, 32, 33, 33a, 33b, 37, 60, 61) lösbar verbunden sind.

11. Möbelstück (500) nach Anspruch 10, wobei die Wandelemente (100 - 104) mit dem Profil (30, 32, 33, 33a, 33b, 37) verschraubt sind.

12. Möbelstück (500, 501, 502) nach Anspruch 10 oder 11, wobei mindestens eines der Profile (30, 32, 33, 33a, 33b, 37, 60, 61) ein Kreuzprofil (33, 33a, 33b, 37) gemäß einem der Ansprüche 7 bis 9 ist.

13. Möbelstück (500, 501, 502) nach einem der Ansprüche 10 bis 12, wobei mindestens eines der Profile (30, 32, 33, 33a, 33b, 37, 60, 61) zwei jeweils in Richtung seiner Längsachse verlaufende Aussparungen (34) zur Aufnahme einer Schlauchdichtung (40) aufweist, weiter umfassend jeweils eine in den zwei Aussparungen (34) angeordnete Schlauchdichtung (40).

14. Möbelstück (500, 501, 502) nach einem der Ansprüche 10 bis 13, wobei mindestens eines der Profile (30, 32, 33, 33a, 33b, 37, 60, 61) zwei Schenkel (36) mit jeweils mindestens einem Durchgangsloch (31) aufweist, und/oder wobei mindestens eines der Profile (30, 32, 33, 33a, 33b, 37, 60, 61) ein L-förmiges Winkelprofil (30) mit mindestens einem Durchgangsloch (31) in jedem seiner beiden Schenkel ist, und/oder wobei mindestens eines der Profile (30, 32, 33, 33a, 33b, 37, 60, 61) ein Kreuzprofil (32, 33, 33a, 33b, 37) mit jeweils mindestens einem Durchgangsloch (31) in zwei benachbarten Schenkeln (36) seiner vier Schenkel (35, 36) ist.

15. Möbelstück (500, 501, 502) nach einem der Ansprüche 10 bis 14, wobei mindestens zwei Wandelemente (100 - 104) in linearer Fortführung zueinander angeordnet sind und mittels zweier parallel verlaufender und miteinander verschraubter Profile (60, 61) fixiert sind.

16. Möbelstück (500, 501, 502) nach einem der Ansprüche 10 bis 15, weiter umfassend ein Scharnier (50, 51), das lösbar mit den Profilelementen (20) zweier benachbarter Wandelemente (100 - 104) verbunden ist, und/oder ein auf das Profil (33, 33a, 33b, 37) einrastbares Clipprofil (41).

17. Möbelstück (500, 501, 502) nach Anspruch 16, wobei eines der beiden benachbarten Wandelemente (100 - 104) mit dem Profil (37) und dem Scharnier (50, 51) verschraubt ist und wobei das diesem Wandelement zugewandte Profilelement (20) des zweiten der beiden benachbarten Wandelemente (100 - 104) nur mit dem Scharnier (50, 51) verschraubt ist.

18. Möbelstück (500, 501, 502) nach einem der Ansprüche 10 bis 17, wobei das Möbelstück eine quaderförmige Glasvitrine ist, die mindestens fünf Wandelemente umfasst.

19. Bausatz für ein Möbelstück (500, 501, 502), insbesondere eine Vitrine, umfassend mehrere Wandelemente (100) gemäß einem der Ansprüche 1 bis 6.

20. Bausatz nach Anspruch 19, weiter umfassend mehrere Profile (30, 32, 33, 33a, 33b, 37) umfassend zwei Schenkel (36), die jeweils mindestens ein Durchgangsloch (31) aufweisen, und/oder mehrere Kreuzprofile (33, 33a, 33b, 37) gemäß einem der Ansprüche 7 bis 9, und/oder mehrere Kreuzprofile (32) mit jeweils mindestens einem Durchgangsloch (31) in zwei benachbarten seiner vier Schenkel, und/oder mehrere L-förmige Winkelprofile (30) mit mindestens jeweils einem Durchgangsloch (31) in jedem seiner beiden Schenkel, und/oder mindestens ein Scharnier (50, 51), und/oder mindestens ein Clipprofil (41) zum Abschluss einer Kante zwischen zwei der mehreren Wandelemente (100), und/oder mindestens eine Schlauchdichtung (40), die in eine Aussparungen (34) eines der mehreren Kreuzprofile (33, 33a, 33b, 37) einlegbar ist, und/oder mindestens eine Schlauchdichtung (40), die in eine Aussparungen (34) eines der mehreren Profile (30, 32, 33, 33a, 33b, 37) einlegbar ist.
